# EUROPEAN PATENT APPLICATION

(11) **EP 2 985 963 A1**
(43) Date of publication of application: **17.02.2016**
(21) Application number: 14290244.4
(22) Date of filing: 12.08.2014
(51) Int. Cl.: H04L 12/863

(54) **Packet scheduling networking device**

(71) Applicant: Alcatel Lucent, 92100 Boulogne-Billancourt (FR)
(72) Inventor: Tang, Siyu, 2018 Antwerpen (BE); Kozicki, Bartlomiej, 2018 Antwerpen (BE); Olaziregi, Nikolas, 2018 Antwerpen (BE)
(74) Representative: Plas, Axel Ivo Michel

(57) **Abstract**

According to an aspect the invention relates to a networking device (100) such as a router or switch for scheduling the transmission of packets over a network interface (130). The device comprises a plurality of queues (122-124, 125-127) configured to buffer packets of a first Quality of Service or QoS class (143, 144). Each queue is configured to buffer packets supporting a certain congestion control type. The device further comprises a scheduler (150) for retrieving these packets from the queues according to a scheduling policy and comprises a forwarding module (110) for forwarding the packets to the queues by inspecting the QoS class and the congestion control type in the packets.

## Description

### Technical Field

The disclosure relates to the field of network devices that schedule the transmission of packets over a network interface such as for example switches, routers and gateways.

Within such devices queues are used to buffer packets temporarily before they are transmitted. The determination of which queues are served in which order is then done by a scheduler using a certain scheduling policy.

### Background

The Internet is expected to accommodate diverse applications with different service requirements. There are interactive or, more general, delay-sensitive applications such as gaming applications and applications for real-time communication of the internet. For example, the WebRTC is an application protocol that allows implementing such real-time communication applications. These applications and services require small end-to-end or E2E delays, e.g. a maximum round trip delay of 150ms for WebRTC, or a hard latency requirement of 50ms for some online gaming applications. Then there are high throughput applications such as HTTP adaptive streaming video applications. A third type of applications relies on a reliable communication channel such as health-care applications and live monitoring applications. In particular, interactive applications such as online gaming or WebRTC have been gaining increasing popularity in recent years..

To cope with the increasing demand for low E2E delay, novel congestion control schemes have been devised at end-hosts to provide low-latency transport. The IETF working group (WG) RTP Media Congestion Avoidance Techniques (RMCAT) was established in 2012 with the aim to propose congestion control algorithms using the Real-time Transport Protocol or RTP. One technique was proposed by Google in *"*H. Lundin, S. Holmer, and H. Alvestrand, Google congestion control algorithm for real-time communication on the world wide web, Draft IETF, 2013*".* This solution, referred to as Google's congestion control or GCC, is composed of two algorithms. A first algorithm runs at the sender-side where a loss-based controller (TCP-like) is used to probe for the available bandwidth. The receiver-side controller then runs a delay-based congestion control algorithm which computes a rate Aᵣ and sends it to the sender. The sending bitrate Aₛ issued by the sender shall never exceed Aᵣ. Similar to other techniques in the class of delay-based congestion control protocols the receiver-side controller in this technique utilizes the one-way delay as a congestion indicator. A sending rate reduction is then triggered at the transmitter side when an increasing one-way delay above a certain threshold is measured at the receiver.

A problem however is that traffic flows using these delay-based congestion protocols need to coexist with other protocols within the same Quality of Service or QoS class. Because of this, the packets using delay-based congestion protocols may be starved by concurrent TCP flows as shown in *"*L. De Cicco, G. Carlucci and S. Mascolo. Understanding the Dynamic Behaviour of the Google Congestion Control for RTCWeb. Packet Video Workshop (PV), 2013 20th International, pp. 1-8, 2013*."* It is thus desirable that techniques are developed that treat data flows within a same Quality of Service class equally such that data flows of one service provider is not favoured over another.

Different solutions have been proposed to alleviate the above problem.

A first solution is the Differentiated Services or DiffServ computer networking architecture. By DiffServ, the network nodes or device may use autonomous algorithms to classify traffic into QoS classes and subsequently treat each class differently. It introduces 6 bits as the DiffServ Code Point or DSCP in the Type of Service or ToS field of the IP header. The DSCP is used for packet classification and marking. Packet forwarding in networking devices in DiffServ is based on Per-Hop Behaviour or PHB associated with a packet's class.

A second solution is offered by Active Queue Management or AQM with schemes such as RED, CoDel or PIE which aim to avoid building up a standing queue in the networking devices. All three AQM schemes use packet drops as the congestion feedback signal to the source of the data flow. Signalling the congestion information via Explicit Congestion Notification or ECN is an alternative to these packet drops.

### Summary

With the first solution, DiffServ allows differentiating between traffic classes and thus between packets in different QoS classes. However, in an access node the DSCP is mapped onto a limited number of traffic queues - typically four - and effectively all flows of OTT or Over The Top traffic are classified into a best effort queue. Consequently, DiffServ does not completely solve the problem as the packets of a delay-based flow and of a loss-based flow are forwarded to the same queue as they are marked as belonging to the same Quality of Service class. Once the two services start sharing the queue, the delay-based flow will be starved due to the nature of the delay-based control implemented in the competing flow. For example, when using DiffServ, packets of a WebRTC user using delay-based congestion control and packets of a HAS user using loss-based congestion control will be forwarded to the same queue as they are marked to the same traffic class. Once the two services start sharing the queue, the WebRTC data flow will be starved due to the nature of the delay-based control implemented in the competing flow.

With AQM, dropping packets may result in an undesired quality degradation for real-time applications using an unreliable RTP/UDP transmission, e.g., Google's WebRTC. This may be solved by ECN, but this requires that not only the intermediate routers and switches are ECN-enabled, but also that the end-hosts are responsive to the ECN signals. At this moment, there does not exist a consolidated solution for end-hosts to be ECN-capable and ECN-responsive. Moreover, before a complete migration to a consolidated ECN solution takes place, some of the end-hosts may respond to the ECN signal while some may not. This, again, leads to the unfairness problem. For example, an ECN-responsive TCP flow will always receive less share of the bandwidth compared with a concurrent non-ECN-responsive TCP flow residing in the same queue of a networking device because an ECN-responsive TCP flow backs off earlier than a normal TCP flow.

It is an object of the disclosure to solve the above disadvantages and problems.

This object is achieved, in a first aspect, by a networking device for scheduling the transmission of packets over a network interface. The device comprises a plurality of queues configured to temporally buffer packets of a first Quality of Service or QoS class, and wherein each queue is configured to buffer packets supporting a certain congestion control type. The device further comprises a scheduler for retrieving these packets from the queues according to a scheduling policy and comprises a forwarding module for forwarding the packets to the queues by inspecting the QoS class and the congestion control type in the packets.

The networking device is thus a device that schedules the transmission of packets on a network interface. Such a device may for example be an Internet Protocol or IP based switch or a router. Typically, a packet that is part of a data flow between a source and a destination will traverse several of these devices. Packets of a certain QoS class are expected to be treated by the same priority meaning that they will be scheduled for delivery after higher priority traffic and before lower priority traffic. QoS classes may range from high priority for real-time traffic such as voice or video communication traffic to low priority traffic for traffic that can be treated on a best-effort basis. For packets of a same QoS class, the networking device comprises several queues where each queue is used for packets of data flows which support a specific congestion control type. In other words, packets supporting a same congestion control type within a specific QoS class are forwarded to the same single queue. The networking device may thus comprise one or more second queues configured to buffer packets of a second Quality of Service or QoS class.

When a packet belonging to a certain data flow arrives in the networking device, the forwarding module will inspect the packet by field matching to identify the QoS class and the congestion control mechanism that is used. The QoS class may for example be determined from the DiffServ Code Point or DSCP in the Type of Service or ToS field of the IP header of the packet. The used congestion control mechanism may for example be retrieved from the packet header of the network layer, transport layer or application layer. Based on the outcome of the field matching, the packets are then forwarded to their respective queue where they are buffered until they are retrieved by the scheduler.

It is an advantage that different queues are used for different types of congestion control types. This way, a certain congestion mechanism will only affect packets in its queue, i.e., packets using the same congestion mechanism. As a result, one type of congestion control or mechanism cannot starve or negatively affect packets of another congestion control type. In other words, the above device allows packets to compete only with similar congestion control schemes and to forward packets with rates proportional to the incoming rate within each congestion control scheme.

According to an embodiment, the scheduler comprises a weighted fair-queue scheduler for applying the scheduling policy to the queues.

The fair-queue scheduling guarantees that packets of all queues and thus of all congestion control types get to be transmitted even if a data flow of one control type is much larger than the data flow of another control type.

The weights allow to steer the scheduler according to the situation. According to a further embodiment, the weights of the weighted fair-queue scheduler are proportional to the relative aggregate bitrates of the data flows in the queues. This way, each queue is treated equally according to the amount of data traffic it carries.

According to an embodiment, the congestion control type comprises:
- support for explicit congestion notification is supported and
- support for a loss-based congestion mechanism and
- support for a delay-based congestion mechanism.

When a field in a data packet indicates support for explicit congestion notification, networking devices in the network path of the packet may notify the sender and/or receiver of a congestion. The sender then acts appropriately on the notification. Explicit Congestion Notification may for example be implemented as an extension to the Internet Protocol and to the Transmission Control Protocol as defined in the IETF RFC 3168 (2001).

A loss-based congestion mechanism will only react to congestion when packets are being lost between the sender and receiver. An example of such a mechanism is the increase of the back-off window in the TCP transport protocol.

A Delay-based congestion mechanism will react to congestion when packets exhibit a large delay which is an indication of packets being uphold in buffers in the intermediate network devices and thus suffering from congestion.

A delay-based congestion mechanisms will react earlier to congestion than loss-based congestion mechanisms. Therefore, when packets of both types are kept in the same queue, the delay-based congestion mechanism will lower its bandwidth thereby also solving the congestion for the loss-based mechanism. Because of this, the packets of the first type would starve in favour of packets supporting a loss-based congestion mechanism. This same effect may occur between packets having a different one of the congestion types above. It is thus an advantage that separate queues for these different congestion type mechanisms prevents such a starvation.

In a second aspect, the invention relates to a system comprising one or more networking devices according to the first aspect. The system further comprises a software defined networking controller adapted to:
- receive sizes of the data flows in the queues from the one or more networking devices; and
- determine the relative aggregate bitrates from these sizes; and
- determine the weights as proportional to these relative aggregate bitrates; and
- program the devices with these weights.

Software defined networking or SDN is a networking architecture where the control plane of networking devices in an access network is separated from these devices and is implemented in a software defined networking controller which sits logically above all these devices. A software defined networking architecture thus decouples the network control or control plane and forwarding functions or data plane, enabling network control to become directly programmable and the underlying infrastructure to be abstracted from applications and network services. The SDN controller thus has a view on the complete network above which it logically resides whereas the control plane in a networking device only has a local narrow view on the network. The SDN controller may run as a software application on a server device. It may then further communicate with the networking devices over a network connection and be means of a communication protocol for the exchange of information and for applying configuration changes to the networking devices. Such protocol may for example be the OpenFlow communication protocol typically used in the field of software defined networking.

It is an advantage that the weights are determined by the networking controller as this controller has a broad view on the network. Therefore it can adjust weights in one network device based sizes of data flows received from another network device.

According to an embodiment, the networking controller is further adapted to:
- Receive information from the networking devices on the detection of new data flows in the forwarding module comprising information on a second QoS class and a second congestion control type in the data flow.
- Configuring a queue in the networking devices for data packets of the second QoS class and the second congestion control type where there is not yet a queue in the networking devices already configured for this second QoS class and this second congestion control type.

The software defined networking controller thus takes the decision to create new queues in the networking devices based on information it receives from the networking devices. As the controller is used for configuring the data plane of the devices, it knows which route a data flow will take and sets up the queues dynamically in the networking devices.

In a second aspect, the disclosure relates to a method for scheduling the transmission of packets over a network interface comprising:
- Buffering packets of a first Quality of Service or QoS class in a first plurality of queues, and wherein each queue is configured to buffer packets supporting a certain congestion control type.
- Retrieving packets from these queues according to a scheduling policy.
- Forwarding these packets to these queues by inspecting the QoS class and the congestion control type in these packets.

In a third aspect, the disclosure relates to a computer program product comprising computer-executable instructions for performing the method according to the second aspect when the program is run on a computer.

In a fourth aspect, the disclosure relates to a computer readable storage medium comprising the computer program product according to the third aspect.

In a fifth aspect, the disclosure relates to a data processing system programmed for carrying out the method according to the second aspect.

### Brief Description of the Drawings

Fig. 1 illustrates a networking device according to an embodiment of the invention; and
Fig. 2 illustrates steps performed by a forwarding module to determine a Quality of Service class and congestion control type for incoming packets; and
Fig. 3 illustrates a system comprising a software defined networking controller and networking devices in an access network according to an embodiment of the invention.

### Detailed Description of Embodiment(s)

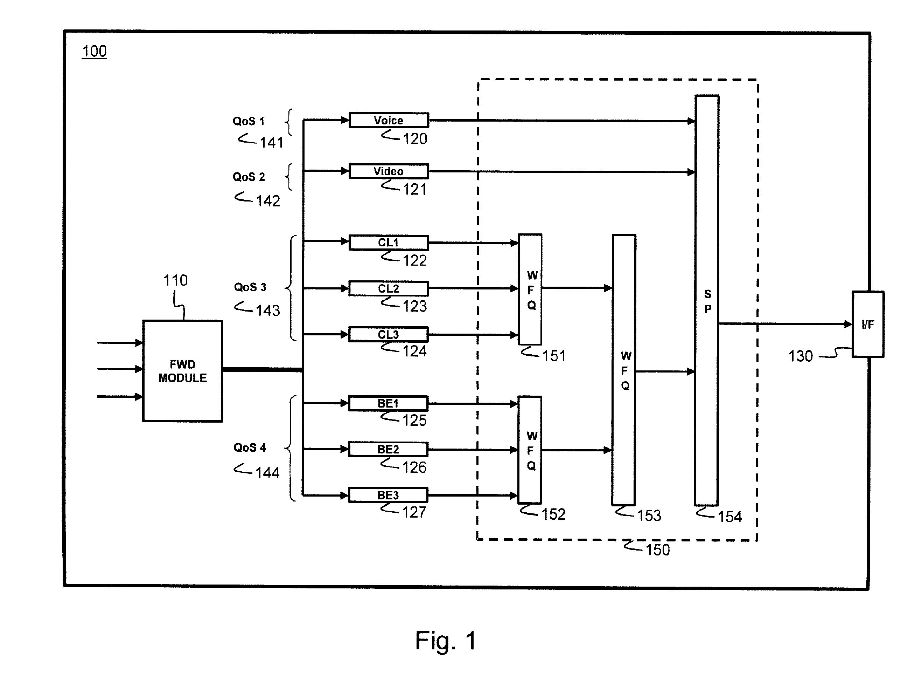

Fig. 1 illustrates a networking device 100 according to an embodiment of the invention. The networking device may be a router or a switch performing switching and routing functions in a network by forwarding packets received from one of its network interfaces to one of its other network interfaces or ports. For the forwarding, the networking device 100 comprises a forwarding module 110. This forwarding module takes as input the packets received by the device 100 on one of its network interfaces. By performing packet inspection it then decides to forward the packets towards one or more of its ports. For a port 130 the device 100 has a plurality of queues 120 till 127 for buffering packets received from the forwarding module. The queues for the port 130 are grouped according to the priority of packets they buffer.

The queue 120 buffers packets with a first highest priority 141 carrying voice payload data. The queue 121 buffers packets according to a second priority 142 carrying video payload data. Queues 122, 123 and 124 buffer packets according to a third priority and queues 125, 126 and 127 buffer packets according to a fourth priority. The third priority may for example be reserved for Controlled Load or CL services and traffic and the fourth priority for Best Effort or BE traffic and services. Within the current disclosure, these priorities are referred to as Quality of Service or QoS classes. The QoS class may be indicated in the packet header by the p-bits which are marked based on the QoS DiffServ Code Point or DSCP in the Type of Service or ToS field of the IP header. A QoS class is further defined in ITU-T Recommendation E.800 of September 2008 as "The totality of characteristics of a telecommunications service that bear on its ability to satisfy stated and implied needs of the user of the service." A group of end-to-end quality performance values - or range - for a service is denoted 'class of service'. A service offering may have around three to five classes of services with specified performance limits for the various parameters. These classes of services are usually provided to accommodate different tariffs to the customer. Certain classes of traffic are handled differently from other classes of traffic, and the classes achieve different levels of QoS, which is referred to as the QoS classes.

The amount of queues within a certain QoS class is then determined by the amount of congestion control mechanisms used for the data traffic within the respective QoS class. In Fig.1 three types of congestion control mechanisms and thus three queues are used for QoS classes 143 and 144:
1. Queue 122 and 125 is dedicated to traffic and thus data packets where the host supports explicit congestion notification or ECN. Explicit Congestion Notification may for example be implemented as an extension to the Internet Protocol and to the Transmission Control Protocol as defined in the IETF RFC 3168 (2001).
2. Queues 123 and 126 are solely for data packets that support a loss-based congestion mechanism and do not have support for ECN. A loss-based congestion mechanism will only react to congestion when packets are being lost between the sender or host and the receiver. An example of such a mechanism is the increase of the back-off window in the TCP transport protocol.
3. Queues 124 and 127 are dedicated for data packets that support a delay-based congestion mechanism without support for ECN. A Delay-based congestion mechanism will react to congestion when packets exhibit a large delay which is an indication of packets being uphold in buffers in the intermediate network devices in thus suffering congestion.

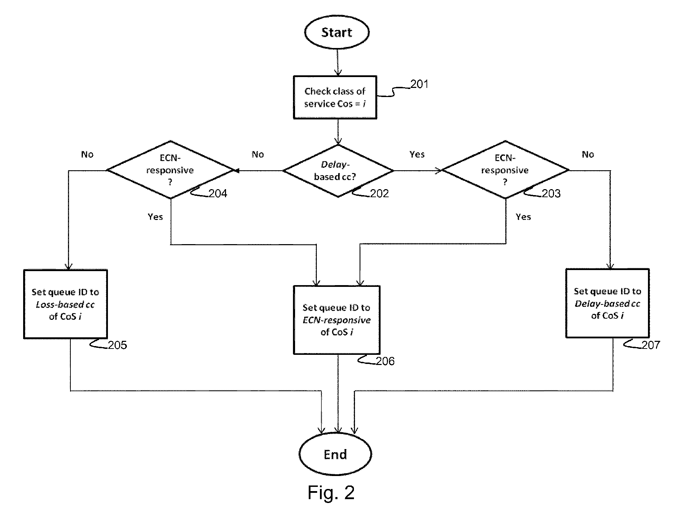

It is the forwarding module 110 that determines to which queue each packet is forwarded. Fig. 2 schematically illustrates how the forwarding module 110 selects the appropriate queue. In step 201 it first checks to which QoS class the packet belongs, for example by inspecting the QoS DiffServ Code Point or DSCP in the Type of Service or ToS field of the IP header. It then checks 202 whether the packet supports a delay-based congestion control mechanism and whether the host is responsive to ECN (steps 203 and 204). If responsive to ECN the packet is associated 206 with the ECN queue. If not responsive, the packet is associated with the delay-based congestion control queue if there is support for it (207) and with the loss-based control type queue if there is no support for delay-based congestion control (205). The forwarding module then forwards the packets to the respective associated queue.

The scheduler 150 then retrieves the packets from the queues 120-127 according to a scheduling policy and forwards them to the network interface 130 for transmission over the network medium. According to an embodiment the scheduler comprises a weighted fair queueing or WFQ scheduler for each set of queues belonging to a single QoS class. The WFQ scheduler 151 schedules the selection of packets from the queues 122, 123 and 124 belonging to the QoS class 143 and the WFQ scheduler 152 selects the packets from the queues 125, 126 and 127 belonging to the QoS class 144. A weight for a specific queue then guarantees a certain maximum relative bitrate for data traffic in this queue with respect to the total data traffic for all data of a respective QoS class. In order to determine the weights, the weight assigned to a queue may be chosen as the ratio of the aggregate bit rate of packets forwarded to that queue and the aggregate bit rate of all packets forwarded by the module 110 to the queues belonging to the respective QoS class.

The WFQ schedulers 151 and 152 are then further cascaded by another WFQ scheduler 153 in order to select packets with a QoS class 143 or 144. At a last stage there is a strict priority scheduler 154 that provides a strict priority to packets from the highest priority classes 141 and 142.

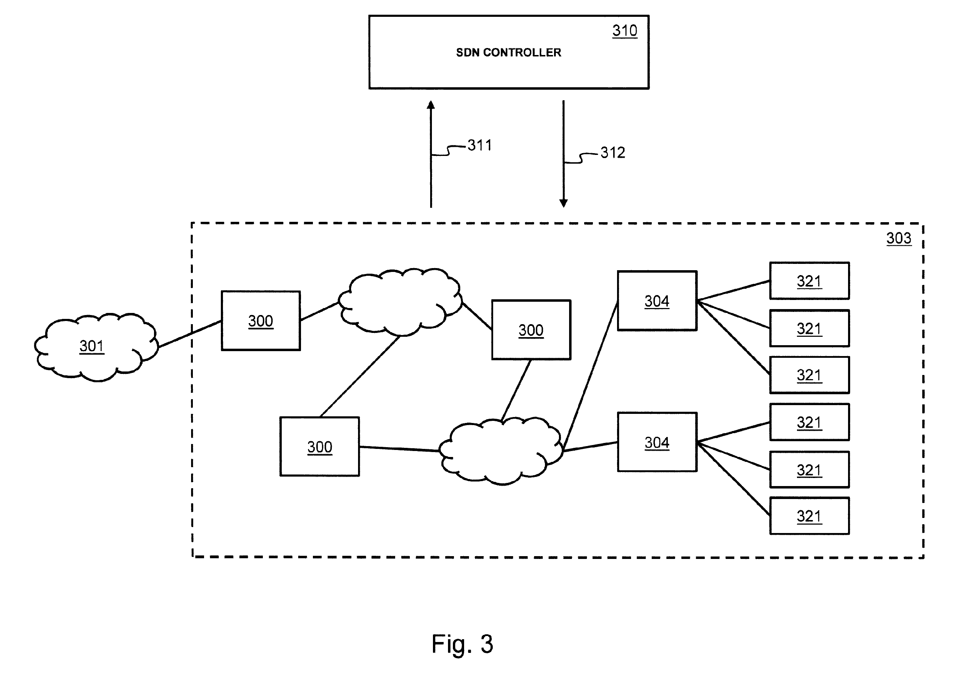

Fig. 3 illustrates a further embodiment wherein the networking device 100 is embodied as a router 300 and an access node 304 in a data access network 303. The devices 300 and 304 provide data plane functionality by routing and switching data packets between a network 301 such as the internet and customer end user equipment 321. The control plane of the devices 300 and 304 is handled by a software defined networking controller 310 which sits logically above all network devices 300 and 304.

The controller 310 holds the state of each of the networking devices 300 and 304 by keeping track of routing schemes and routing tables used for forwarding packets from one networking interface or port to another. It further keeps track of the queues defined in each networking device, i.e. what QoS classes and congestion types are associated with the queues. It also keeps track of the scheduling policies and thus of the weights used in the WFQ schedulers.

The controller 310 also keeps track of the data flows in the access network 303 where a data flow is defined by a series of packets flowing from a specific source to a specific destination. In order to keep track of the data flows, the networking devices 300 and 304 forward 311 information identifying the data flow to the controller 310. This may be done as soon as a first packet of the data flow arrives in the networking devices 300 and 304.

The networking devices 300 and 304 further gather statistics on the number of packets and bytes associated with each of the data flows in question, i.e. they gather sizes of the data flows in the respective queues and forward 311 these sizes to the controller 310.

When the controller has received 311 the sizes of the flows data flows in the queues from the networking devices, it determines the relative aggregate bitrates in each queue. From these bitrates, it then determines the weights of the WFQ schedulers as the ratio between the aggregate bitrate of a respective queue and the total aggregate bitrate of all queues in the QoS class of the respective queue. The new weights are then programmed 312 in the respective networking devices 300 and 304.

As the controller has also a complete view over the network 303, it has an overall view on the congestion control mechanisms of all flows in the network 303. When a new congestion control type is identified in a new data flow, the controller 303 will:
- Identify the networking devices 300 and 304 that will receive this data flow.
- Initialize 312 a new queue in the respective devices 300 and 304 for that specific congestion control type and within the QoS class of the data flow.

In order to communicate between the SDN controller 310 and the networking devices 300 and 304, a protocol for polling 311 and pushing 312 information between the networking devices 300 and 304 and the controller 310 may be used. Such a protocol may for example be the OpenFlow communication protocol.

The functions of the SDN controller 310 have been illustrated for the management of networking devices in an access network 303, but may also be applied to other types of networks as long as an SDN controller has access to networking devices 300 and 304 such as routers and switches that can perform packet header examination and support the use of a plurality of queues for buffering the packets before transmission.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (100, 300, 304) for scheduling the transmission of packets over a network interface (130) comprising:
- a plurality of queues (122-124, 125-127) configured to buffer packets of a first Quality of Service or QoS class (143, 144), and wherein each queue is configured to buffer packets supporting a certain congestion control type;
- a scheduler (150) for retrieving said packets from said queues according to a scheduling policy;
- a forwarding module (110) for forwarding said packets to said queues by inspecting said QoS class and said congestion control type in said packets.

2. A networking device (100, 300, 304) according to claim 1 further comprising:
- one or more second queues (120, 121) configured to buffer packets of a second Quality of Service or QoS class.

3. A networking device (100, 300, 304) according to claim 1 or 2 wherein said scheduler (150) comprises a weighted fair-queue scheduler (151, 152) for applying said scheduling policy to said queues (122-124, 125-127).

4. A networking device (100, 300, 304) according to claim 3 wherein weights of said weighted fair-queue scheduler are proportional to relative aggregate bitrates of data flows in said queues.

5. A networking device (100, 300, 304) according to any one of claims 1 to 4 wherein a congestion control type comprises the following types:
- explicit congestion notification is supported; and
- a loss-based congestion mechanism is supported; and
- a delay-based congestion mechanism is supported.

6. A system comprising one or more networking devices (300, 304) according to claim 4 or according to claim 4 and 5; said system further comprising a software defined networking controller (310) adapted to:
- receiving (311) sizes of said data flows in said queues from said one or more networking devices; and
- determining said relative aggregate bitrates from said sizes; and
- determining said weights as proportional to said relative aggregate bitrates; and
- programming (312) said devices with said weights.

7. The system according to claim 6 wherein said controller is further adapted to:
- receiving (311) information from said networking devices (100) on the detection of new data flows in said forwarding module (110) comprising information on a second QoS class and a second congestion control type in said data flow; and
- configuring (312) a queue in said networking devices (100) for data packets of said second QoS class and said second congestion control type where there is not yet a queue in said networking devices already configured for this second QoS class and this second congestion control type.

8. A method for scheduling the transmission of packets over a network interface (130) comprising:
- buffering packets of a first Quality of Service or QoS class (143, 144) in a first plurality of queues, and wherein each queue is configured to buffer packets supporting a certain congestion control type; and
- retrieving packets from said queues according to a scheduling policy; and
- forwarding said packets to said queues by inspecting said QoS class and said congestion control type in said packets.

9. A computer program product comprising computer-executable instructions for performing the method according to claim 8 when the program is run on a computer.

10. A computer readable storage medium comprising the computer program product according to claim 9.

11. A data processing system programmed for carrying out the method according to claim 8.
